# EUROPEAN PATENT SPECIFICATION

(11) **EP 3 768 639 B1**
(45) Date of publication and mention of the grant of the patent: **02.07.2025**
(21) Application number: 19727109.1
(22) Date of filing: 13.03.2019
(51) Int. Cl.: C01C 1/02, C25B 1/00, H01M 8/22

(54) **GREEN ENERGY SUPPLY SYSTEM**
SYSTEM ZUR VERSORGUNG MIT GRÜNER ENERGIE
SYSTÈME D'ALIMENTATION EN ÉNERGIE VERTE

(30) Priority: 19.03.2018 NL 1042793
(43) Date of publication of application: 27.01.2021
(73) Proprietor: Leotwa B.V., 7548 RG Enschede (NL)
(72) Inventor: LEEFERS, Arjan Gerard, 7548 RG Enschede (NL); OTTINK, Marcellinus Laurentius, 7554 PK Hengelo (NL); WAANDERS, Remco Gerhard, 7648 PP Enschede (NL)
(74) Representative: Algemeen Octrooi- en Merkenbureau B.V.
(86) International application number: PCT/NL2019/000004
(87) International publication number: WO 2019/182438

(56) References cited:
- US-A1- 2012 068 471
- US-A1- 2012 189 923
- US-A1- 2015 017 089
- PETER LUIMES ET AL: "Struvietprecipitatie in combinatie met stickstofeinning en omzetting in een brandstofcel", 19 December 2013 (2013-12-19), XP055598731, ISBN: 978-90-57-73635-3, Retrieved from the Internet <URL:https://www.stowa.nl/sites/default/files/assets/PUBLICATIES/Publicaties%202013/STOWA%202013-33.pdf> [retrieved on 20190624]

## Description

### Field of the invention

The present invention relates to a green energy supply system. The invention comprises a method and a device for an integral, non-centrally managed energy supply within a small-scale network of co-operating consumers and producers of green energy from renewable sources such as solar and wind energy.

### Background of the invention

The present invention has for its object to contribute toward the solution for two known global problems: 1) the problems associated with the extraction and use of fossil energy sources and 2) the problems associated with the surpluses of animal manure in livestock-dense regions. The extraction of energy from manure and the utilization thereof in a non-centrally managed, relatively small-scale green energy supply system form the unifying theme.

Energy supply systems are understood in this context to mean systems which have the purpose of harnessing energy sources, collecting and storing the energy and making it usable by and available to energy-consuming processes. Green energy is understood here to mean energy from renewable sources.

In known energy supply systems the energy sources are regular sources with fossil fuels such as petroleum, natural gas and coal, but also the alternative non-fossil renewable green sources such as wind energy, tidal energy, solar energy, geothermal energy, energy from waste processing and from biomass. The fossil sources are finite and will eventually be exhausted. Indefinite use can be made of green energy sources, and in general considerably less carbon dioxide is released in the extraction thereof. Examples of systems for collecting fossil energy are coal mines and oil/gas drilling rigs. Examples of systems for collecting green energy are solar panels, water turbines, wind turbines, gasifiers and digesters for biofuel from biomass.

Biomass consists of diverse organic materials such as wood, vegetable, fruit and garden waste, but also vegetable oil, and crops specially cultivated for the purpose. This also includes manure from farm animals and rejection water from water treatment plants.

Different processes are known with which animal manure can be converted to energy, although each process, as well as having advantages, also has drawbacks such as relatively high production costs and a high environmental impact. Known processes lack an integral approach to the energy supply system and are therefore not suitable for sustainable and cost-effective large-scale utilization.

The first object of the present invention is therefore to provide a method and a device for an integral, non-centrally managed green energy supply for a further defined small-scale network of co-operating energy producers and consumers, wherein residual flows such as animal manure and rejection water serve as raw material.

The application of green energy in the form of electricity is becoming increasingly widespread. A great drawback is that the amount of generated green electricity is not constant, whereby shortfalls and surpluses occur due to daily and seasonal fluctuations (day-night, dear-cloudy, wind-no wind, low temperature-high temperature). Known systems for storing electricity for short or long periods, such as batteries, are relatively expensive, have a limited lifespan and the production thereof has an environmental impact. In order to regulate demand for and supply of green electricity, use is however made of Smart Grid. Smart Grid is an electricity system which makes use of information, two-way traffic, communication technologies and computer intelligence in order to provide for generation, distribution and consumption of electricity in an integrated manner (source: Smart Grid: The Electric Energy System of the Future; Proceedings of the IEEE, Vol. 99, No.6, June 2011). The conventional electricity system in which generation is centralized and demand-driven has great limitations in an increasingly electrified environment in which there is also a need to integrate green-generated electricity. Examples in which these limitations become evident are districts where everyone wants to charge their electric car simultaneously or districts where all houses have solar panels and much more is generated than is being consumed at that moment. This means that network operators, producers and consumers must coordinate their consumption more frequently in order to make the most efficient possible use of the electricity system and to prevent overload.

Falling within Smart Grid are different types of solution where bottlenecks in the network have to be overcome:
- regulating supply: when supply threatens to become too much for the local network, for instance a district with many solar panels.
- regulating demand: when supply fluctuates, this can be dealt with by fluctuating demand in a similar manner. This is possible for instance by adjusting the consumer price to the supply.

In a household a smart meter could, when it defects that the price has fallen, give a signal to the electric car that it can begin charging. However, if this takes place on a small scale, demand and supply remain in imbalance because supply fluctuates.

Smart Grid is thus a useful tool for an optimal coordination of demand and supply of green energy within a system at local level, but in order to be able to make a non-centrally managed system as self-regulating as possible a solution must be found for dealing with periodic shortfalls and surpluses at local level.

A known method of energy storage is the storage of diverse types of fuel in fuel tanks. A drawback is that carbon dioxide is released during the combustion of these (mainly) fossil fuels for the purpose of producing electricity. This is not the case during the combustion of hydrogen (H₂), though the storage of hydrogen requires an extremely high pressure and the associated high standards of the storage system. US 2012/068471 A1 discloses a method of generating electricity in a fuel cell using ammonia, the ammonia being obtained from a waste source.

The second object of the present invention is therefore to provide a method and a device for an integral, non-centrally managed green energy supply for a small-scale network of co-operating energy producers and consumers by storing energy in a sustainable and cost-effective manner in order to deal with temporary shortfalls and surpluses.

### Summary of the invention

For this purpose the present invention relates to a method for an integral, non-centrally managed energy supply within a small-scale network of co-operating consumers and producers of green energy from renewable sources such as solar and wind energy, the method comprises of applying struvite (MgNH₄PO₄) and ammonia (NH₃) as energy carriers for the supply of usable energy, characterized in that the method further comprises of:
i) temporary storage of energy in the form of struvite and ammonia as energy carriers in situations where the production of energy within the network exceeds demand for energy by the energy users within the network, this for the purpose of use in situations where the demand exceeds production,
ii) producing ammonia using electricity in situations where the production of electricity exceeds demand for energy by the energy users within the network,
iii) producing struvite from ammonia for the purpose of storing energy in situations in which the production of ammonia exceeds demand for energy by the energy users within the network,
   wherein a thin fraction of manure collected from livestock farms and rejection water from water treatment plants are used as raw material for the production of the struvite.

An energy carrier is understood here to mean a substance which comprises energy to be converted later or elsewhere to usable energy. The first advantage of struvite and ammonia is that both substances do not comprise any carbon and do not produce any carbon dioxide as residual product when they are used in an energy supply system. A second advantage is that struvite and ammonia are relatively well suitable for storage in a safe and inexpensive manner.

According to the present method the thin fraction of manure collected from livestock farms and rejection water from water treatment plants is used as raw material for the production of struvite. The invention hereby makes a contribution toward reducing the manure surplus in livestock-dense regions.

The method is further characterized in that the method provides for the production of struvite using a crystallizer, with the addition of magnesium salts such as newberyite.

The method according to the invention further provides for converting struvite to ammonia using a known precipitation technique. An advantage of ammonia over struvite is that ammonia is more suitable to serve as energy carrier in an energy supply system. Ammonia is thus deemed a likely replacement for petrol for combustion engines because of the relatively clean combustion, the reasonably high energy density and the possibility of utilizing the petrol transport infrastructure. The production of ammonia from struvite is further described in STOWA report 2013-33 (ISBN 978.90.5773.635.3).

For use of energy in the green energy supply system in the form of electricity it is advantageous that the invention provides for converting ammonia to electricity using an aggregate or a fuel cell and also comprises distribution thereof within the energy network. The utilization of ammonia in a fuel cell (SOFC - Solid Oxide Fuel Cell) is likewise further described in the above-mentioned STOWA report 2013-33.

In addition to utilizing ammonia for the production of electricity, the method according to the invention provides for the distribution of ammonia within the energy network for energy users, with ammonia as energy carrier.

In situations where the production of energy within the network exceeds demand, for the purpose of use in situations where the demand exceeds production the method provides for temporary storage of energy in the form of struvite and ammonia as energy carriers. An advantage of the two substances is that they are relatively easy to hold in storage, struvite in the form of granules in bulk storage and ammonia in liquid form in storage systems similar to those for LPG.

For situations where the production of electricity within the energy supply system exceeds demand, for instance due to the conversion of solar energy to electricity, the method according to the invention provides for the production of ammonia using electricity. Examples of methods for producing ammonia using electricity are stated elsewhere in this document

Struvite is easier and cheaper to store than ammonia. For this reason the method provides for the production of struvite from ammonia for the purpose of storing energy in situations in which the production of ammonia exceeds demand.

The method according to the present invention comprises of applying Smart Grid for integral management of the energy supply for the purpose of regulating production and takeoff of energy.

The device consist according to the present invention of a smart integral application of known techniques and systems in a relatively small-scale, non-centrally managed green energy supply system. The device comprise among others:
- a crystallizer for producing struvite from manure from livestock farms or from rejection water from water treatment plants;
- a precipitation system for producing ammonia from struvite;
- an ammonia tank for temporary storage of ammonia;
- a distribution network for ammonia as energy carrier for fuel engines and fuel cells;
- a fuel cell or aggregate for producing electricity;
- a distribution network for transporting electricity to consumers of electricity and from producers of green electricity;
- an electrolysis system for forming ammonia, with electricity as energy carrier;
- a storage location for storing struvite as buffer supply;
- ammonia panels for producing ammonia from solar energy;
- a crystallizer for producing struvite from ammonia from ammonia panels;
- means which together form a Smart Grid.

### Brief description of the drawings

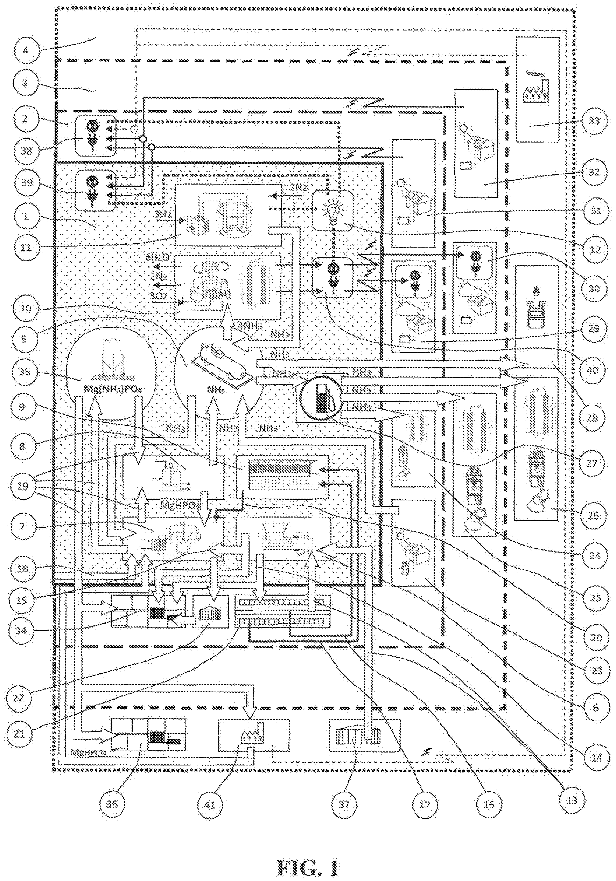

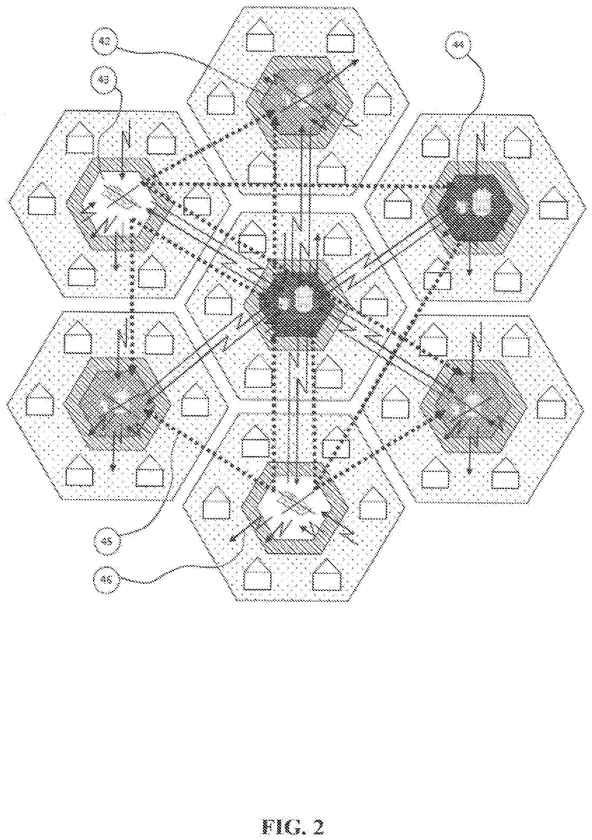

The invention is elucidated hereinbelow with reference to two figures. Figure 1 herein shows schematically an overview of a green energy supply system. Figure 2 shows schematically an overview of co-operating clusters of energy partners, each with a green energy supply system.

### Exemplary embodiments

The invention will be further elucidated below by way of example on the basis of one exemplary embodiment shown in the drawing. Figure 1 here shows schematically a small-scale, non-centrally managed, integral green energy supply system according to the invention. Different energy partners work together within the green energy supply system. An energy partner can produce or take off (raw materials for) green energy, or both. In addition, energy partners can utilize residual flows from the energy production as raw material for other purposes. The green energy supply system according to the present invention distinguishes four types of energy partner. The energy partner of the first type (1) involved in the production and storage of green energy occupies a central position in the green energy supply system. The present invention comprises a green energy supply system which is based on struvite and ammonia as energy carriers. The energy partner of the first type (1) is active, among other ways, in the production and storage of struvite and ammonia. The energy partner of the second type (2) specializes in the supply of raw materials for producing struvite and ammonia. All companies which can supply raw materials on a large scale for the production of struvite and ammonia can in principle be considered as energy partner of the second type (2). Known examples are optionally co-operative livestock farms, such as pig and dairy cattle farms, and a treatment plant for sewage or surface water. Animal manure as raw material for producing struvite can also be supplied from elsewhere, i.e. from outside (37) the green energy supply system.

Energy partners within the green energy supply system mainly active in takeoff of green energy and to lesser extent in the production of energy are deemed as energy partners of the third type (3). Private individuals and companies are considered, among others, to be partners of this type according to the invention. Energy partners of the third type (3) can also produce and deliver green energy to the green energy supply system, for instance using solar panels, in a situation where production temporarily exceeds the use of energy by the energy partners.

The green energy supply system according to the invention also provides for co-operation between individual, spatially separated, more or less autonomous clusters of energy partners. When the energy partners work together in a co-operative, the co-operation is suitable in the Netherlands for participation in the PostCodeRoos (postcode catchment area) scheme (PCR scheme) whereby private individuals and companies in a postcode catchment area (PCR area) can enjoy exemption from energy tax. An example of co-operation between such co-operatives of different energy partners in a green energy supply system between different PCR areas is shown schematically in figure 2.

The energy partners of the fourth type (4) consist of the known central energy supply systems with national coverage and centrally managed energy networks for, among others, gas and electricity. The co-operation with the energy partner of the fourth type (4) is intended for the purpose of exchanging energy in the case of temporary shortfalls or surpluses in central energy supply systems as well as non-central green energy supply systems.

A green energy supply system according to the present invention comprises a cluster of said energy partners (1 to 3) with a scope which can be considered small-scale relative to known energy supply systems with national coverage.

A green energy supply system according to the invention is further elucidated on the basis of an exemplary embodiment wherein a livestock farm (21) provides animal manure (13) as raw material for the struvite and ammonia production within the green energy supply system.

According to the invention animal manure (13) is separated by a known manure separator (6) into a thick fraction (14) and a thin fraction (15), The thick fraction (14) is deemed a residual product of the green energy supply system and can be utilized as a valuable fertilizer, for instance for agricultural crops and as litter for dairy cattle stalls in a cubicle accommodation of a livestock farm (21).
After optional filtering, the thin fraction (15) is fed to a known crystallizer(7). Using crystallizer (7), and with the addition of magnesium salts such as magnesium hydrogen sulphate, struvite is produced. According to the invention struvite is used as raw material for the production of ammonia. Struvite is a stable and easily storable product and is well suitable for bulk storage, for instance in a struvite silo (35). The residual product in the production of struvite using a crystallizer (7) is an effluent with a high fertilizing value. According to the diagram in figure 1 the effluent is stored in a silo (22).

Collected stall air (17) and manure pit air (16) are carried through a known air washer (9). The discharge water (20) formed here also serves as raw material for the production of struvite using crystallizer (7).

According to the invention the thus produced struvite serves as raw material for the production of ammonia. Just as methanol, ammonia is generally considered a promising alternative to pure hydrogen as energy carrier. Pure hydrogen can only be stored under extreme conditions and is highly explosive. The storage of ammonia in liquid form is on the other hand simple and similar to that for LPG. Ammonia gas becomes liquid at 25 degrees and at low pressure (10 bar), the energy density is about half that of petrol and it does not comprise any carbon. Ammonia is generally considered to be an attractive alternative to petrol because of the clean combustion, a reasonably high energy density and the facility with which it can be stored. The infrastructure for the distribution of petrol moreover need not be converted for ammonia. The gas has a low explosion risk compared to other fuels. A greater hazard are the vapours in the case of leakage. Although these are very easy to smell, at high concentration they are physically dangerous or even fatal. It evaporates quickly in the open air but can be really dangerous in closed spaces. The ammonia can be converted to electricity in existing gas-fired power stations or in fuel cells.

In the green energy supply system according to the invention the production of ammonia is related to the demand for energy by the energy users within the system. The production of the relatively inexpensive and easily storable struvite is on the other hand driven more by the supply of raw materials. Struvite forms the most important energy buffer within the green energy supply system.

The demand-driven production of ammonia takes place using a precipitation system (8). The operation of the precipitation system is further elucidated in the above-mentioned STOWA report 2013-33. The liquid ammonia created in precipitation system (8) is stored temporarily in an ammonia tank (5) which, just as struvite silo (35), serves as buffer supply for offsetting fluctuations in the energy demand.

Magnesium hydrogen sulphate is formed as residual product in the production of ammonia. This residue is fed to crystallizer (7) for the purpose of producing struvite.

According to the invention the ammonia is made available in the green energy supply system as energy carrier for combustion engines and fuel cells for transport purposes, as energy carrier for heating and for the generation of electricity.

The produced ammonia is available via a pump (27) as energy carrier for (vehicles or electrical aggregates with) combustion engines or fuel cells at the commercial premises (24) of the energy partner of the second type (2) and for participating private individuals and companies, i.e. energy partners of the third type (3). The produced ammonia can also be disposed of outside the network of the co-operating energy partners. The green energy supply system according to the invention thus makes provision that surplus produced ammonia is delivered via the central gas network (28) to an energy partner of the fourth type (4). A surplus of struvite can also be disposed of in this way. A surplus of struvite can also be utilized as high-quality fertilizer for own use (34) or for use elsewhere (36).

For energy production by the energy partner of the first type (1) in the form of electricity the green energy supply system according to the invention is provided with a combined heat and power unit, an aggregate or a fuel cell (10) for converting ammonia to electricity, water and nitrogen gas.

The green energy supply system also comprises of producing green electricity, for instance by means of solar panels and wind turbines, at the energy partners of the second and third type (2, 3). Because of fluctuations in the production of electricity through natural causes, shortfalls can occur at an energy partner (29) of the second type (2) and at collective energy partners (30) of the third type (3). In a situation where the demand for electricity exceeds production the green energy supply system provides for the supply of green electricity (40) by ammonia being converted to electricity (10) by the energy partner of the first type (1).

Supply of electricity (40) to the energy partner of the first type (1) and to the energy partner of the second type (2) is provided for by production of green electricity (31) by the energy partner of the second type (2) and by production of green electricity (32) by the energy partners of the third type (3). A production surplus at an individual energy partner of the second or third type (2, 3) is used in the first instance to remedy a production shortfall at another energy partner (2, 3). In a situation where within a green electricity supply system the production of electricity exceeds the demand, the surplus is converted via an electrolysis system (11) to ammonia and added to the ammonia supply in ammonia tank (5). The conversion of electricity to ammonia as energy carrier by means of electrolysis can for instance take place by means of the known Haber-Bosch process. Another method of converting hydrogen to ammonia via electrolysis is Puls Jet (source: International Energy Outlook 2007; Science, 6 September 2002; Vol. 297, No. 5587, pp. 1654 - 1655; DOI: 10.1126/science.1076659).

Via a known Smart Grid module (12) the desired energy conversion processes are smart controlled, assigned and tracked. Smart Grid is an electricity system which makes use of information, two-way traffic, communication technologies and computer intelligence in an integrated manner for generation, distribution and consumption of electricity. The non-central network manager, producers and consumers can in this way coordinate their consumption optimally in order to make the most efficient possible use of the energy system and to prevent overload. The Smart Grid module (12) also regulates the exceptional situation where the overall system can no longer provide itself with sufficient green electricity and the system must therefore be supplemented with energy from the national grid (33).

The green electricity supply system according to the invention also provides for ammonia panels (23) for producing ammonia using solar energy and by means of a known redox method. In order to limit storage costs an overproduction of ammonia can be converted to struvite via crystallizer (7).

The above specified green electricity supply system is characterized as a non-centrally managed, more or less autonomously regulated closed system with different green energy cycles. Enhancement of the system is possible by upscaling via co-operation between different, organizationally separated green energy supply systems. Figure 2 shows schematically an association between seven different clusters of energy partners, illustrated as a hexagon, each with its own green energy supply system. The mutual co-operation consists of exchanging energy in the form of green electricity (46) and in the form of the green energy carrier struvite (45) according to the present invention. The example according to figure 2 shows two clusters, each comprising a complete green energy supply system. That is, they comprise all components as described above and shown schematically in figure 1. These two clusters are represented by the hexagon in the centre and the hexagon at top right (44). Both clusters (44) can process both electricity and struvite from a first cluster (42) which is not provided with an electrolysis system (11) and from a second cluster (43) which is not provided with either an electrolysis system (11) or a precipitation system (8) for the production of ammonia from struvite. In the diagram of figure 2 the clusters (42) without electrolysis system (11) are illustrated by the hexagon at top centre in the diagram and bottom right in the diagram. These clusters (42) can thus not make ammonia from electricity, but can process the struvite to ammonia and thereby also process struvite from clusters (43) which cannot process struvite to ammonia. This means that clusters (43) can supply struvite for processing to ammonia to clusters (42) and (44). These clusters (42 and 43) can also supply electricity (surpluses) which clusters (44) can convert to ammonia and struvite.

In associations as shown schematically in figure 2 the efficient use of surplus enemy from one cluster by another cluster is advantageous. The small scale of the clusters of co-operating energy partners and co-operating clusters is also an advantage when compared to national networks because the transport of electricity (thickness of the cables) and the struvite (short transport distance) is relatively inexpensive and can be realized without any particular problems.

In the case of a very large co-operative in combination with participation of a relatively large number of clusters of companies provided with an incomplete system (42) and/or (43), making use of a green energy power station (41) as incorporated in figure 1 could then be considered. While this power station, which can process struvite to electricity, is less favourable where the above stated transport is concerned, it can have the effect of lowering the threshold in opting for the present system, it can also be favourable for national coverage to involve the regions with less manure production.

Following from the exemplary embodiment of a green energy supply system described here is how waste products such as animal manure and rejection water from water treatment plants can be utilized as raw material for energy production, as components of an integral system with more green energy sources. In addition to animal manure and rejection water, other waste products can also be utilized, such as for instance the urine collected from mobile toilets and urinals.

According to the invention the raw materials are converted to struvite in order to take advantage of the readiness with which struvite can be stored. According to the invention struvite is converted to ammonia in order to serve as energy carrier for diverse types of energy user. The local use of the energy by co-operating energy partners within a green energy supply system contributes toward limitation of energy transport, or toward reducing the load on national energy distribution networks. The transport advantages also apply for residual flows from the energy production, such as residual products which can serve as high-quality fertilizer for local use.

Due to the storage of ammonia, and in particular struvite, and by drawing from this storage, situations where the demand for energy does not correspond to the production of energy within a green energy supply system, for instance due to natural influences such as lack of wind, can be limited to a minimum.

The mutual co-operation between non-centrally managed clusters of energy partners with their own green energy supply system and the co-operation between these clusters and national, centrally managed energy supply systems according to the present invention creates on the one hand new possibilities for a cost-effective contribution of new green energy sources toward the demand for energy, and on the other new possibilities for incorporating waste products as valuable raw materials in green cycles.

According to one non-limitative exemplary embodiment of the invention, the co-operating energy partners within a more or less autonomous green energy supply system consist of an energy production company (energy partner of the first type), one or more livestock farms (energy partner of the second type) and local companies and private individuals (energy partners of the third type). It is the case for all partners that they use and (can) supply energy.

Also disclosed are exemplary embodiments of the above specified green energy supply system not further shown in the drawing which comprise the measures below, as standalone or in combination:
- method wherein the heat supply of the precipitation system (8) is produced by heat recovery from the combined heat and power unit, the aggregate or the fuel cell (10);
- method wherein the heat supply to the precipitation system (8) is produced by heat recovery from the cooling of milk by a milking installation at a dairy farm;
- method wherein the concentration of ammonia from the precipitation system (8) is increased with pure ammonia from the buffer supply of ammonia in the ammonia tank (5);
- method wherein lye is used from the residual flow of the milking installation;
- method wherein an acid constituent for acidification at the pre-crystallization stage is taken from the residual flow of the milking installation;
- method wherein an acid constituent for acidification at the pre-crystallization stage is taken from the discharge water (20), this being an acidified nitrogen solution. The pre-crystallizer is here a mixing tank which is disposed upstream of the crystallizer (7) where a low degree of acidity is created with acidic discharge water (20) so as to make the magnesium hydrogen sulphate and other phosphate compounds readily soluble;
- method wherein an acid constituent for acidification at the pre-crystallization stage is taken from acidified manure. Acidifying manure is a known method of limiting the emission of ammonia.
- a green energy supply system with the above stated features on the scale of a private individual or private household;
- a green energy supply system with one or more of the above stated features on the scale of a private individual or private household, wherein struvite is converted via ammonia to heat and electricity and provided directly to respectively a central heating boiler and fuel cell in order to increase the energy efficiency by direct utilization of electricity and heat;
- a green energy supply system with one or more of the above stated features in an application for processing digestate from a bio-digester, a manure digester or a mono-digester as solution to the problems associated with the disposal of digestate.

## Claims

1. Method for an integral, non-centrally managed energy supply within a small-scale network of co-operating consumers and producers of green energy from renewable sources such as solar and wind energy, the method comprises of applying struvite (MgNH₄PO₄) and ammonia (NH₃) as energy carriers for the supply of usable energy, **characterized in that** the method further comprises of:
i) temporary storage of energy in the form of struvite and ammonia as energy carriers in situations where the production of energy within the network exceeds demand for energy by the energy users within the network, this for the purpose of use in situations where the demand exceeds production,
ii) producing ammonia using electricity in situations where the production of electricity exceeds demand for energy by the energy users within the network,
iii) producing struvite from ammonia for the purpose of storing energy in situations in which the production of ammonia exceeds demand for energy by the energy users within the network,
wherein a thin fraction (15) of manure (13) collected from livestock farms (21) and rejection water from water treatment plants are used as raw material for the production of the struvite.

2. Method as claimed in claim 1, **characterized in that** the method comprises of producing the struvite using a crystallizer (7), with the addition of magnesium salts such as newberyite.

3. Method as claimed in any of the claims 1-2, **characterized in that** the method comprises of converting the produced struvite to ammonia using a known precipitation technique.

4. Method as claimed in claim 1 or 3, **characterized in that** the method comprises of converting ammonia to electricity using an aggregate.

5. Method as claimed in claim 1 or 3, **characterized in that** the method comprises of converting ammonia to electricity using a fuel cell (10).

6. Device for an integral, non-centrally managed energy supply within a small-scale network of co-operating consumers and producers of green energy from renewable sources, **characterized in that** the device comprises a crystallizer for producing struvite from manure collected from livestock farms, a distribution network for ammonia as energy carrier for fuel engines and fuel cells, a fuel cell for producing electricity from ammonia, an electrolysis system (11) for forming ammonia, with electricity as energy carrier and a precipitation system for producing ammonia from the struvite.

7. Device as claimed in claim 6, **characterized in that** the device comprises a crystallizer for producing struvite from rejection water from water treatment plants.

8. Device as claimed in any of the claims 6-7, **characterized in that** the device comprises an ammonia tank (5) for temporary storage of the ammonia and a storage location for storing struvite as buffer supply.

9. Device as claimed in any of the claims 6-8, **characterized in that** the device comprises a distribution network for transporting electricity to consumers of electricity and from producers of green electricity.

10. Device as claimed in any of the claims 6-9, **characterized in: that** the device comprises ammonia panels (23) for producing ammonia from solar energy.

11. Device as claimed in any of the claims 6-10, **characterized in that** the device comprises a crystallizer for producing struvite from ammonia from ammonia panels.

12. Device as claimed in any of the claims 6-11, **characterized in that** the device comprises means which together form a Smart Grid (12).

## Patentansprüche

1. Verfahren für eine integrale, dezentral geführte Energieversorgung innerhalb eines kleinen Netzwerks kooperierender Verbraucher und Erzeuger von Ökoenergie aus erneuerbaren Quellen, wie z.B. Sonnen- und Windenergie, wobei das Verfahren Anwenden von Struvit (MgNH₄PO₄) und Ammoniak (NH₃) als Energieträger für die Versorgung mit nutzbarer Energie umfasst, **dadurch gekennzeichnet, dass** das Verfahren ferner umfasst:
i) zeitweiliges Speichern von Energie in der Form von Struvit und Ammoniak als Energieträger in Situationen, in denen die Erzeugung von Energie innerhalb des Netzwerks den Energiebedarf der Energieverbraucher innerhalb des Netzwerks übersteigt, zum Zweck der Verwendung in Situationen, in denen der Bedarf die Produktion übersteigt,
ii) Erzeugen von Ammoniak unter Verwendung von Strom in Situationen, in denen die Stromerzeugung den Energiebedarf der Energieverbraucher innerhalb des Netzwerks übersteigt,
iii) Herstellen von Struvit aus Ammoniak zum Zweck des Speicherns von Energie in Situationen, in denen die Erzeugung von Ammoniak den Energiebedarf der Energieverbraucher innerhalb des Netzwerks übersteigt,
wobei eine dünne Fraktion (15) von Dung (13), der von Viehbetrieben (21) erhalten wurde, und Abwasser von Wasseraufbereitungsanlagen als Ausgangsmaterial für die Herstellung des Struvits verwendet werden.

2. Verfahren nach Anspruch 1, **dadurch gekennzeichnet, dass** das Verfahren die Herstellung des Struvits unter Verwendung eines Kristallisators (7) unter Zugabe von Magnesiumsalzen, wie z.B. Newberyit, umfasst.

3. Verfahren nach einem der Ansprüche 1-2, **dadurch gekennzeichnet, dass** das Verfahren Umwandeln des hergestellten Struvits in Ammoniak unter Verwendung eines bekannten Präzipitationsverfahrens umfasst.

4. Verfahren nach Anspruch 1 oder 3, **dadurch gekennzeichnet, dass** das Verfahren Umwandeln von Ammoniak in Strom unter Verwendung eines Aggregats umfasst.

5. Verfahren nach Anspruch 1 oder 3, **dadurch gekennzeichnet, dass** das Verfahren Umwandeln von Ammoniak in Strom unter Verwendung einer Brennstoffzelle (10) umfasst.

6. Vorrichtung für eine integrale, dezentral geführte Energieversorgung innerhalb eines kleinen Netzwerks kooperierender Verbraucher und Erzeuger von Ökoenergie aus erneuerbaren Quellen, **dadurch gekennzeichnet, dass** die Vorrichtung einen Kristallisator zur Herstellung von Struvit aus von Viehbetrieben erhaltenem Dung, ein Verteilungsnetzwerk für Ammoniak als Energieträger für Verbrennungsmotoren und Brennstoffzellen, eine Brennstoffzelle zur Stromerzeugung aus Ammoniak, ein Elektrolysesystem (11) zum Bilden von Ammoniak mit Strom als Energieträger und ein Präzipitationssystem zur Erzeugung von Ammoniak aus dem Struvit umfasst.

7. Vorrichtung nach Anspruch 6, **dadurch gekennzeichnet, dass** die Vorrichtung einen Kristallisator zur Herstellung von Struvit aus Abwasser aus Wasseraufbereitungsanlagen umfasst.

8. Vorrichtung nach einem der Ansprüche 6-7, **dadurch gekennzeichnet, dass** die Vorrichtung einen Ammoniaktank (5) zur Zwischenlagerung des Ammoniaks und einen Lagerort zum Lagern von Struvit als Pufferversorgung umfasst.

9. Vorrichtung nach einem der Ansprüche 6-8, **dadurch gekennzeichnet, dass** die Vorrichtung ein Verteilungsnetzwerk zum Befördern von Strom zu Verbrauchern von Strom und von Erzeugern von Ökostrom umfasst.

10. Vorrichtung nach einem der Ansprüche 6-9, **dadurch gekennzeichnet, dass** die Vorrichtung Ammoniakpaneele (23) zur Erzeugung von Ammoniak aus Sonnenenergie umfasst.

11. Vorrichtung nach einem der Ansprüche 6-10, **dadurch gekennzeichnet, dass** die Vorrichtung einen Kristallisator zur Herstellung von Struvit aus Ammoniak aus Ammoniakpaneelen umfasst.

12. Vorrichtung nach einem der Ansprüche 6-11, **dadurch gekennzeichnet, dass** die Vorrichtung Mittel, die zusammen ein Smart Grid (12) bilden, umfasst.

## Revendications

1. Procédé pour une alimentation en énergie intégrale, non gérée de manière centralisée dans un petit réseau de consommateurs et de producteurs coopérants d'énergie verte de sources renouvelables telles que l'énergie solaire et l'énergie éolienne, le procédé comprend l'application de struvite (MgNH₄PO₄) et d'ammoniac (NH₃) en tant que porteurs d'énergie pour l'alimentation en énergie utilisable, **caractérisé en ce que** le procédé comprend en outre :
i) le stockage temporaire d'énergie sous forme de struvite et d'ammoniac en tant que porteurs d'énergie dans les situations où la production d'énergie dans le réseau dépasse la demande d'énergie par les utilisateurs d'énergie dans le réseau, ceci à des fins d'utilisation dans les situations où la demande dépasse la production,
ii) la production d'ammoniac en utilisant l'électricité dans les situations où la production d'électricité dépasse la demande d'énergie par les utilisateurs d'énergie dans le réseau,
iii) la production de struvite à partir de l'ammoniac dans le but de stocker l'énergie dans les situations où la production d'ammoniac dépasse la demande d'énergie par les utilisateurs d'énergie dans le réseau,
dans lequel une fraction fine (15) de fumier (13) collecté dans des fermes d'élevage (21) et l'eau de rejet des stations de traitement des eaux sont utilisées comme matière première pour la production de la struvite.

2. Procédé selon la revendication 1, **caractérisé en ce que** le procédé comprend la production de la struvite en utilisant un cristalliseur (7), avec l'ajout de sels de magnésium tels que la newbéryite.

3. Procédé selon l'une des revendications 1 et 2, **caractérisé en ce que** le procédé comprend la conversion de la struvite produite en ammoniac en utilisant une technique de précipitation connue.

4. Procédé selon la revendication 1 ou 3, **caractérisé en ce que** le procédé comprend la conversion de l'ammoniac en électricité en utilisant un agrégat.

5. Procédé selon la revendication 1 ou 3, **caractérisé en ce que** le procédé comprend la conversion de l'ammoniac en électricité en utilisant une pile à combustible (10).

6. Dispositif pour une alimentation en énergie intégrale, non gérée de manière centralisée dans un petit réseau de consommateurs et de producteurs coopérants d'énergie verte de sources renouvelables, **caractérisé en ce que** le dispositif comprend un cristalliseur pour la production de struvite à partir de fumier collecté dans des fermes d'élevage, un réseau de distribution pour l'ammoniac en tant que porteur d'énergie pour les moteurs à combustible et les piles à combustible, une pile à combustible pour la production d'électricité à partir de l'ammoniac, un système d'électrolyse (11) pour la formation d'ammoniac, avec l'électricité comme porteur d'énergie et un système de précipitation pour la production d'ammoniac à partir de la struvite.

7. Dispositif selon la revendication 6, **caractérisé en ce que** le dispositif comprend un cristalliseur pour la production de struvite à partir des eaux de rejet des stations de traitement des eaux.

8. Dispositif selon l'une des revendications 6 et 7, **caractérisé en ce que** le dispositif comprend un réservoir d'ammoniac (5) pour le stockage temporaire de l'ammoniac et un emplacement de stockage pour stocker la struvite comme réserve tampon.

9. Dispositif selon l'une des revendications 6 à 8, **caractérisé en ce que** le dispositif comprend un réseau de distribution pour transporter l'électricité aux consommateurs d'électricité et depuis les producteurs d'électricité verte.

10. Dispositif selon l'une des revendications 6 à 9, **caractérisé en ce que** le dispositif comprend des panneaux d'ammoniac (23) pour produire de l'ammoniac à partir de l'énergie solaire.

11. Dispositif selon l'une des revendications 6 à 10, **caractérisé en ce que** le dispositif comprend un cristalliseur pour la production de struvite à partir de l'ammoniac des panneaux d'ammoniac.

12. Dispositif selon l'une des revendications 6 à 11, **caractérisé en ce que** le dispositif comprend des moyens qui forment ensemble un réseau électrique intelligent (12).
